# EUROPÄISCHE PATENTANMELDUNG

(11) **EP 1 990 119 A1**
(43) Veröffentlichungstag der Anmeldung: **12.11.2008**
(21) Anmeldenummer: 08008251.4
(22) Anmeldetag: 30.04.2008
(51) Int. Cl.: B23D 47/04, B27B 5/065, B27B 31/00

(54) **Horizontale Plattensäge**

(30) Priorität: 04.05.2007 DE 102007021410
(71) Anmelder: Keusch, Siegfried, 73779 Deizisau (DE)
(72) Erfinder: Keusch, Siegfried, 73779 Deizisau (DE)
(74) Vertreter: Laufer, Gabriele

(57) **Zusammenfassung**

Die Erfindung betrifft eine Sägevorrichtung (15) mit einem schwenkbaren und linear verfahrbarem Sägeaggregat (17), einer Werkstückauflage (22,38), einer Einrichtung zum Spannen (3) von einem oder mehreren Werkstücken und einer Einrichtung zum Vorwärtsbewegen und Positionieren (2) des/der Werkstücks/e. An der Werkstückauflage ist eine Anlagekante bereitgestellt, die vorzugsweise seitlich an der Werkstückauflage liegt und die parallel oder senkrecht zu einer Vorschubrichtung (37) des Werkstücks liegt. Parallel zur Vorschubrichtung sind ein oder mehrere Fixierschlitten (33) angeordnet, die Saugvorrichtungen tragen, die über eine Vakuumquelle, insbesondere eine Vakuumpumpe (24) versorgt werden und die auf einem Rahmen (34) sitzen, der in Vorschubrichtung des Werkstücks auf Linearführungen bewegbar ist und wobei entlang des Sägeschnitts Saugeinrichtungen (6') angeordnet sind.

## Beschreibung

Die Erfindung betrifft eine Sägevorrichtung mit einem schwenkbaren und linear verfahrbarem Sägeaggregat, einer Werkstückauflage, einer Einrichtung zum Spannen von einem oder mehreren Werkstücken und einer Einrichtung zum Vorwärtsbewegen und Positionieren des/der Werkstücks/e.

Es ist Stand der Technik, plattenförmige Werkstücke aus Holz, Kunststoff, Nichteisenmetalle oder holzähnlichem Werkstoff auf so genannten Tischkreissägen, Tischkreissägen mit Schiebeschlitten, vertikalen Plattensägen oder Plattenaufteilanlagen aufzutrennen.

Die Genauigkeit eines zugeschnittenen Werkstückes ist mit Formatsägen und vertikalen Plattensägen begrenzt, da entweder bei den Formatsägen das Werkstück in seiner ganzen Länge entlang einem Parallelanschlag bewegt werden muss oder bei vertikalen Plattensägen ein Festspannen der Werkstückplatte nicht möglich ist und durch die Schräglage der Werkstückplatte bei Sägen frei werdende Spannungen aus der Platte die Schnittqualität beeinträchtigen.

Auch ist ein Verfahren bekannt (gemäß DE 3517714 C2), bei dem planparallele flächige Materialstücke aus Holz mittels Längs- und Quersägen gemäß einem vorgegebenen Schnittbild zugeschnitten und durch Roboter transportiert werden.

Ferner werden bei horizontal arbeitenden Aufteilsägen gemäß dem Stand der Technik die Platten durch Spannzangen an einem parallel zum Sägeschnitt angeordneten Vorschubschlitten festgehalten und zur Einstellung der Zuschnittmasse senkrecht zum Sägeschnitt vorgeschoben. Zum Festhalten der Platten während dem Sägeschnitt wird ein sog. Druckbalken, der vertikal auf die Platten drückt, verwendet.

Dieser Druckbalken ist üblicherweise wegen der Länge in der Höhe stark dimensioniert und lässt keine schnellen Zuschnitte zu, da das abgesägte Werkstück wieder in das Spannzangensystem aufwändig zurückgegeben werden muss. Die Vorteile dieser horizontal arbeitenden Aufteilsägen ist der, dass mehrere Platten gemeinsam geschnitten werden können und ein Optimierungsvorgang beim Sägen gleicher Platten erreicht werden kann. Die horizontalen Aufteilsägen benötigen einen sehr großen Flächenbedarf und sind sehr teuer und werden somit in erster Linie in der Industrie eingesetzt, wo sie in Fertigungsstraßen eingegliedert sind.

Aufgabe der Erfindung ist, eine Sägeeinrichtung 15 zu schaffen, die ein horizontales Sägen des Werkstücks 1 zulässt, das während des Sägeschnitts nicht bewegt werden muss, nur einen beschränkten Flächenbedarf benötigt, eine flexible Handhabung beim Sägen zulässt, bei der der Bediener direkten Zugriff auf ein zugesägtes Teilwerkstück erhält und bei dem ohne Anstrengung ein Werkstück während des Zuschnitts gehändelt werden kann.

Diese Aufgabe wird erfindungsgemäß gelöst, indem an der Werkstückauflage eine Anlagekante bereitgestellt ist, die vorzugsweise seitlich an der Werkstückauflage liegt und die parallel oder senkrecht zu einer Vorschubrichtung des Werkstücks liegt, wobei parallel zur Vorschubrichtung ein oder mehrere Fixierschlitten angeordnet sind, die Saugvorrichtungen tragen, die über eine Vakuumquelle, insbesondere eine Vakuumpumpe versorgt werden und die auf einem Rahmen sitzen, der in Vorschubrichtung des Werkstücks auf Linearführungen bewegbar ist und wobei entlang des Sägeschnitts Saugeinrichtungen (6') angeordnet sind.

Die erfindungsgemäße Sägevorrichtung zeichnet sich durch eine Kombination von Merkmalen aus, die eine besonders effiziente Arbeitsweise ermöglicht und hierbei eine platzsparende Konstruktion der gesamten Sägevorrichtung zulässt. Die Sägevorrichtung weist eine Anlagekante auf, die eine referenzierte Positionierung eines Werkstücks auf einer Werkstückauflage ermöglicht. Die Anlagekante kann durch zwei oder mehrere einzelne Anlagepunkte oder -linien gebildet werden, die in Fluchtung zueinander angeordnet sind oder kann durch eine sich flächig erstreckende ebene Anlagefläche gebildet werden. Die Werkstückauflage kann in gleicher Weise durch mehrere Auflagepunkte, die in einer gemeinsamen Ebene liegen, gebildet werden, oder kann durch eine Fläche gebildet werden. Erfindungsgemäß ist die Werkstückauflage horizontal ausgerichtet, so dass ein Werkstück in einfacher Weise auf der Werkstückauflage platziert und positioniert werden kann. Die erfindungsgemäße Sägevorrichtung weist weiterhin eine Einrichtung zum Spannen von einem Werkstück auf, die beispielsweise durch einen oder mehrere Spannpratzen gebildet werden kann oder durch eine oder mehrere Vakuumsaugelemente oder dergleichen. Des Weiteren weist die erfindungsgemäße Sägevorrichtung eine Einrichtung zum Vorwärtsbewegen und Positionieren auf, mit deren Hilfe es möglich ist, das Werkstück auf der Werkstückauflage in definierter Weise zu bewegen und zu positionieren. In der einfachsten Ausgestaltung wird diese Einrichtung durch die Werkstückauflage selbst gebildet, auf der das Werkstück durch manuellen Angriff des Bedieners verschoben werden kann.

Die Anlagekante kann parallel oder senkrecht zu der Vorschubrichtung liegen. Unter Vorschubrichtung ist im Sinne dieser Beschreibung und der Ansprüche die Richtung senkrecht zur linearen Verfahrbewegung des Sägeaggregats zu verstehen. Die Anlagekante kann dabei, wenn sie parallel zu dieser Vorschubrichtung angeordnet ist, durch eine über die Werkstückauflagefläche hinausragende Struktur gebildet werden, die permanent in dieser herausragenden Position angeordnet ist. In bestimmten Fällen, und insbesondere wenn die Werkstückanlage senkrecht zur Vorschubrichtung liegt, ist es jedoch vorteilhaft, wenn die Anlagekante durch versenkbare Strukturen, beispielsweise versenkbare Stifte oder Leisten, gebildet wird, um hierdurch ein Werkstück zunächst bei ausgefahrener Struktur ausrichten zu können, hiernach gegebenenfalls zu spannen und dann nach Einfahren der Strukturen, welche die Anlagekante bilden, das Werkstück zu bewegen und zu positionieren, wobei dann auf die zuvor referenzierte Lage Bezug genommen werden kann.

Erfindungsgemäß ist vorgesehen, dass parallel zur Vorschubrichtung ein oder mehrere Fixierschlitten angeordnet sind. Diese Fixierschlitten tragen Saugvorrichtungen, die es ermöglichen, dass ein Werkstück, welches auf die Werkstückauflage aufgelegt ist, von unten durch Vakuum gespannt wird. Der oder die Fixierschlitten ist/sind mit zumindest einer solchen Saugvorrichtung versehen, in praktischer Ausführung werden mehrere Saugvorrichtungen vorzusehen sein, um eine sichere Spannung von Werkstücken unterschiedlicher Abmessungen zu erzielen. Der oder die Fixierschlitten ist/sind auf einem Rahmen aufgesetzt, der mitsamt dieser Fixierschlitten in Vorschubrichtung des Werkstücks linear beweglich ist. Auf diese Weise kann ein mittels der Saugeinrichtungen gespanntes Werkstück in Vorschubrichtung bewegt und zu positioniert werden.

In der praktischen Anwendung kann daher mit der erfindungsgemäßen Sägevorrichtung eine referenzierte Auflage eines Werkstücks mit Hilfe der Anlagekante erzielt werden, das Werkstück hiernach mit Hilfe der Saugeinrichtungen an den Fixierschlitten gespannt werden und in dieser gespannten Situation bewegt und positioniert werden, um ein definiertes Maß für den durchzuführenden Sägeschnitt einzustellen. Die Bewegung und Positionierung kann hierbei in einem einzigen Schritt erfolgen, gegebenenfalls kann auch durch Lösen der Spannung, Rückverschieben der Fixierschlitten und nochmaliges Spannen und Verschieben der Fixierschlitten in zwei oder mehr Schritten eine größere Verschiebung und letztendliche Positionierung erfolgen, wobei das Werkstück während des Rückverschiebens der Fixierschlitten auf der Werkstückauflage liegt und gegebenenfalls durch andere Spannvorrichtungen fixiert werden kann. Als Ergebnis dieses Verschiebungs- und Positionierungsvorgangs liegt das Werkstück in einem zuvor bestimmten Maß in Bezug auf die lineare Verfahrbewegung des Sägeaggregats, d. h. in der Regel oberhalb eines Sägeschlitzes, welches den Durchtritt des Sägeblatts von unten durch die Werkstückauflage ermöglicht.

Zur Durchführung des Sägeschnittes sind entlang des Sägeschnitts, d. h. einseitig oder beidseitig vom Sägeschlitz, durch den das Sägeblatt nach oben durch die Werkstückauflage durchtritt, mehrere Saugeinrichtungen angeordnet. Durch diese Saugeinrichtungen wird eine besonders präzise Werkstückbearbeitung ermöglicht, da auch große Werkstücke sicher und genau entlang des gesamten Sägeschnitts gespannt werden können. Die Saugeinrichtungen können dabei vorzugsweise so ausgebildet sein, wie auch die Saugeinrichtungen an dem Fixierschlitten ausgebildet sind.

Grundsätzlich ist für eine effiziente Spannung mittels solcher Saugeinrichtungen es vorteilhaft, wenn die Saugeinrichtungen nur dann mit einem Vakuum beaufschlagt werden, wenn ein Werkstück auf den Saugeinrichtungen platziert ist. In einer konstruktiven Ausgestaltung können die Saugeinrichtungen mit einem Saugteller mit einem vorzugsweise dezentralen, über den Saugtellerrand nach oben vorstehenden Stift ausgeführt sein, wobei der Stift mit einem Ventil verbunden ist, dass durch Eindrücken des Stiftes, wenn ein Werkstück auf den Saugteller aufgelegt wird, geöffnet wird und hierdurch die Vakuumzufuhr zum Saugteller freigibt. Die Saugeinrichtungen sind vorzugsweise so angeordnet, dass sie durch automatisierte oder manuelle Spannbetätigung nach oben über die Werkstückauflagefläche ausgefahren werden können und hierdurch in Kontakt zum Werkstück treten, für die Platzierung eines Werkstücks und gegebenenfalls manuelle Ausrichtung jedoch nach unten unterhalb die Werkstückauflagefläche abgesenkt werden können, um hierdurch das Verschieben des Werkstücks zu erleichtern und eine Beschädigung der Saugeinrichtungen durch eine solche Verschiebung zu vermeiden.

Gemäß einer ersten bevorzugten Ausführungsform ist es bevorzugt, wenn die Einrichtung zum Spannen von einem Werkstücken und die Einrichtung zum Vorwärtsbewegen und Positionieren des/der Werkstücks/e in einer Einrichtung integriert ist, die vorzugsweise weiterhin ein Bedienpult umfasst. Diese Ausgestaltung kann beispielsweise als eine oder mehrere Spannpratzen oder Vakuumelemente ausgeführt sein, die verschiebbar sind, vorzugsweise in Vorschubrichtung und auf diese Weise zwei Funktionen gleichzeitig erfüllen, nämlich das Spannen des Werkstücks und das Verschieben und Positionieren des Werkstücks.

Noch weiter ist es bevorzugt, wenn die Einrichtung zum Spannen von einem oder mehreren Werkstücken mehrere Spannpratzen zum Festklemmen des Werkstücks umfasst, die vorzugsweise auf einem Vorschubschlitten in Reihe parallel zu Vorschubrichtung angeordnet sind und die weiter vorzugsweise Führungsbolzen umfassen, welche die Anlagekante für das Werkstück bilden. Solche Spannpratzen ermöglichen es, das Werkstück in einem Kantenbereich oder ausgehend von einer Kante in sicherer und automatisierbarer Weise zu spannen. Insbesondere dann, wenn die Spannpratzen an einem Vorschubschlitten angeordnet sind, kann hierdurch zugleich der Spannvorgang und auch die Verschiebe- und Positionierbewegung ausgeführt werden.

Dabei ist es weiterhin besonders bevorzugt, wenn die Fixierschlitten parallel zum Vorschubschlitten angeordnet sind und vorzugsweise gemeinsam mit dem Vorschubschlitten auf dem Rahmen sitzen und mit diesem bewegbar sind. Durch diese Ausgestaltung können insbesondere auch Werkstücke, die sich ausgehend von dem Vorschubschlitten über ein großes Maß erstrecken, in sicherer und präziser Weise verschoben und positioniert werden, indem sie nicht alleine durch Verschieben und Positionieren des Vorschubschlittens bewegt werden, sondern hierbei unterstützend auch durch einen oder mehrere Fixierschlitten, die in der senkrecht zur Vorschubrichtung liegenden Richtung beabstandet vom Vorschubschlitten sind und das Werkstück von unten spannen und somit etwaige, zur Verkantung und zu Positionierfehlern führenden Hebelkräften am Werkstück entgegenwirken können.

Gemäß einer weiteren bevorzugten Ausführungsform umfasst das Sägeaggregat eine Hauptsäge und eine Ritzsäge. Die Ritzsäge dient hierbei dazu, die auf der Zahnaustrittsseite der Hauptsäge liegende Fläche des Werkstücks anzuritzen, um auf beiden Seiten des Werkstücks eine saubere Schnittkante zu erzielen.

Gemäß einer noch weiteren bevorzugten Ausführungsform ist das Sägeaggregat mit einem elektromotorischen, pneumatischen oder hydraulischen Antrieb versehen, um es linear verfahren zu können. Die lineare Bewegung des Sägeaggregats kann insbesondere an das zu schneidende Werkstück, d. h. an dessen Materialbeschaffenheit und Stärke, angepasst werden und kann insbesondere als konstante Verfahrbewegung oder als in der Geschwindigkeit gesteuerte Verfahrbewegung ausgeführt werden. So ist es oftmals vorteilhaft, wenn bei vorbekannten Abmessungen das Sägeaggregat mittels des Antriebs zum linearen Verfahren in einer schnellen Zuführbewegung an das Werkstück herangeführt wird und dann auf die erforderliche, niedrigere Bewegungsgeschwindigkeit für den Sägeschnitt abgesenkt wird und der Sägeschnitt dann in dieser Geschwindigkeit ausgeführt wird.

Noch weiter ist es bevorzugt, wenn die Werkstückauflage einen Aufgabetisch und einen Abnahmetisch umfasst, wobei die Anlagekante seitlich am Aufgabetisch liegt und Aufgabetisch und/oder Abnahmetisch vorzugsweise eine Lagerung zur horizontalen Verschiebbarkeit von aufgelegten Werkstücken umfassen, insbesondere ein oder mehrere Luftlager, Kugellager oder Rollenlager. Unter einem Aufgabetisch ist hierbei der Teil der Werkstückauflage zu verstehen, auf dem ein zuzuschneidendes Plattenhalbzeug platziert und der größere Anteil des Werkstücks flächenmäßig aufgelegt wird. Unter dem Abnahmetisch ist hierbei ein flächenmäßig in der Regel kleinerer Auflagebereich der Werkstückauflage zu verstehen, auf dem derjenige Teil des Plattenhalbzeugs aufgelegt wird, der durch den Sägeschnitt vom anderen, größeren Teil des Plattenhalbzeugs abgetrennt wird. Dies hat zur Folge, dass der abgetrennte Teil nach Durchführung des Sägeschnitts auf dem Abnahmetisch liegt und hiervon abgenommen oder weiterbearbeitet werden kann.

In bestimmten Anwendungen kann der Abnahmetisch auch für die Durchführung mehrerer Sägeschnitte nacheinander ausgestaltet sein, beispielsweise indem der Abnahmetisch absenkbar ist, so dass ein abgetrenntes Teil so weit abgesenkt wird, dass für einen nachfolgend durchzuführenden Sägeschnitt das Plattenhalbzeug im Bereich des Abnahmetisches auf dem zuvor abgetrennten Teil aufgelegt werden kann und auf diese Weise mehrere Werkstückteile in gestapelter Weise auf dem Abnahmetisch abgelegt werden können.

Zur leichteren Verschiebbarkeit und Positionierbarkeit können sowohl Aufgabetisch als auch Abgabetisch mit Lagerungen versehen sein, wie beispielsweise in die Oberfläche eingelassene und gelagerte Kugeln oder Luftdüsen, die mit Druckluft beaufschlagt werden können, um hierdurch insbesondere bei schweren Werkstücken eine Verschiebung und Positionierung zu erleichtern und eine Beschädigung der Werkstücke auf der auflageseitigen Fläche zu vermeiden.

Noch weiter ist es bevorzugt, wenn die Fixierschlitten, der Vorschubschlitten und/oder der Rahmen von einem NC-gesteuerten Motor vor- und rückwärts bewegbar ist/sind. Hierdurch wird eine NC-gesteuerte Vorschubsteuerung und somit ein in Teilen oder vollständig automatisierter Arbeitsablauf mit der erfindungsgemäßen Sägevorrichtung ermöglicht.

Gemäß einer weiteren bevorzugten Ausführungsform sind die entlang des Sägeschnitts angeordneten Saugeinrichtungen in einer oder mehreren Reihen angeordnet und vorzugsweise ist/sind zumindest eine Reihe auf der einem/dem Aufgabetisch gegenüberliegenden Seite angeordnet. Durch diese Ausgestaltung wird eine besonders sichere Fixierung des Werkstücks im Bereich des Sägeschnitts erzielt und hierdurch kann die Präzision des Sägeschnitts erhöht werden, da etwaigen Verschiebungen des Werkstücks durch Freiwerden von Spannungen im Zuge des Sägeschnitts oder dergleichen durch die Spannwirkung entgegengewirkt werden kann. Insbesondere ist es bevorzugt, wenn zumindest eine Reihe der Saugeinrichtungen auf der dem Aufgabetisch gegenüberliegenden Seite angeordnet ist, d. h. eine Reihe der Saugeinrichtungen ist insbesondere auf einem oder dem Abnahmetisch angeordnet. Diese Saugeinrichtung dient somit in besonderer Weise dazu, das von dem Plattenhalbzeug abzutrennende Werkstück zu fixieren und kann daher einerseits die Bediensicherheit erhöhen, indem eine etwaige unkontrollierte Bewegung des abgetrennten Werkstücks verhindert wird und darüber hinaus eine sichere Weiterverarbeitung ermöglichen, indem das abgetrennte Werkstück in einer zuvor berechneten und positionierten Weise gehalten wird.

Gemäß einer noch weiteren bevorzugten Ausführungsform ist das Sägeaggregat in eine Werkzeugwechselposition verfahrbar ist, und durch Verfahren des Sägeaggregats in die Werkzeugwechselposition wird eine Abdeckklappe entriegelt und gegebenenfalls geöffnet, welche einen Werkzeugwechsel ermöglicht. Grundsätzlich ist aus Gründen der Bedienungssicherheit das Sägeblatt des Sägeaggregats in jeglicher Arbeitsstellung und insbesondere dann, wenn es rotiert, soweit als möglich abzudecken, um etwaigen Verletzungen des Bedienpersonals vorzubeugen. Um jedoch einen Wechsel des Kreissägeblatts zu ermöglichen, ist es notwendig, dass in einer solchen Weise diese Abdeckungen entfernt oder abgeklappt oder verschoben werden können, um das Sägeblatt demontieren und entnehmen zu können und in entsprechender Weise ein neues Sägeblatt einsetzen und montieren zu können. Die erfindungsgemäße Fortbildung sieht hierzu vor, dass das Sägeaggregat in eine spezifische Werkzeugwechselposition verfahren werden kann, die im Zuge der Ausführung eines normalen Sägeschnitts nicht vom Sägeaggregat belegt oder durchlaufen wird. Sofern das Sägeaggregat in diese Position verfahren wird, was durch manuelle Betätigung oder eine automatisierte Steuerung erfolgen kann, wird zugleich eine Abdeckklappe entriegelt, die dann beispielsweise öffnet oder manuell geöffnet werden kann und hierdurch den Zugang zum Kreissägeblatt freigibt, um den Werkzeugwechsel zu ermöglichen. Insbesondere kann hierbei vorgesehen sein, dass das Sägeaggregat bei Bewegen in die Werkzeugwechselposition in jedem Fall dahingehend deaktiviert wird, dass eine Rotation des Sägeblatts in dieser Position ausgeschlossen ist.

Die erfindungsgemäße Sägevorrichtung 15 besteht gemäß einer beispielhaften Ausführungsform aus einem Sägegestell 16 mit bekannt geformten Sägetisch 14 entsprechend dem Stand der Technik mit einen Sägewagen 17 mit um 45 Winkelgrad schwenkbarer Haupt- und Ritzsäge 18/19, einer entsprechenden Längsführung 23 und einem elektromotorischen Antrieb.

Der übliche Spaltkeil ist verstärkt und trägt an der Oberkante des Spaltkeils 20 parallel zur Tischoberfläche 21 eine schwenkbare Schutzhaube 10, über die eine Absaughaube 11 gestülpt ist und die an deren Oberseite einen Absaugschlauch 12 für die abzusaugenden Späne und an der Unterseite Borsten 13 trägt, die auf der Tischoberfläche 21 gleiten und den Absaugraum weitgehend verschließen.

Auf der Tischoberfläche 21 des Sägegestells sind zum Aufgabetisch 22 zeigend in Reihe absenkbare Saugeinrichtungen 6' angeordnet , die während dem Sägeschnitt das Werkstück fest auf den Tisch festsaugen, sobald ein Auslösepin 25 vom Werkstück betätigt wird, wie dies von Bearbeitungszentren her bekannt ist. Diese Saugeinrichtungen 6 werden von Vakuumpumpen 24 mit Vakuum gespeist. Wird eine Saugeinrichtung 6 nicht vom Werkstück überdeckt, entsteht in einer solchen Saugeinrichtung auch kein Vakuum und somit auch kein Verlust.

Die Bedienposition 28 des Bedieners 26 ist nicht am Abnahmetisch 38 der Maschine vor dem Druckbalken positioniert, sondern an der Seite der Sägevorrichtung 15, an der auch Vorschubschlitten 2 mit den auf ihm angeordneten pneumatischen Betätigbahren Spannpratzen 3 zum Festhalten des Werkstückes positioniert ist. Die Zentralbolzen 30 der Spannpratzen 3 bilden in Ihrer senkrechten Flucht zur Sägelinie eine Anschlagkante 31, an der die Werkstücke 1 vom Bediener 26 angeschlagen werden.

Zum Schutz des Bedieners 26 ist zwischen Vorschubschlitten 2 und dem Bediener 26 eine Distanzeinrichtung 29 angebracht. Fußpedale zur Auslösung von Spannpratzen, Luftkissen und Saugeinrichtungen sind vorgesehen, das gesamte Bedienpult 32 ist neben dem Bediener angebracht und gegebenenfalls seitlich verschiebbar. In Verbindung zum Vorschubschlitten 2 sind auf einem oder mehreren parallel angeordneten Schlitten 33 Saugeinrichtungen 6 angeordnet, die während der Vorschubbewegung (Zustellung) des Werkstückes zum gewünschten Maß keine Verschiebungen des Werkstückes zulassen. Der Vorschubschlitten 2 mit Spannpratzen 3 und der oder die Schlitten 33 mit Saugeinrichtungen 6 sitzen auf einem gemeinsamen Rahmen 34, der auf Führungen 35 parallel zur Vorschubrichtung 37 des Werkstückes 1 läuft und der über eine elektromotorische Vorschubeinheit 43 (NC-programmierbar) vor- und rückwärts bewegt wird. Der Vorschub des Rahmens 34 beträgt aus Gründen des Flächenbedarfs der Sägevorrichtung 15 nur 1000 mm. Wird ein Werkstück 1 mit einer Länge von mehr als 1000mm benötigt, wird das um obiges Maß 1000mm vorgeschobene Werkstück von je 1 vor 2 hinter dem Sägeschnitt fest in der Tischplatte 14 des Sägegestells angeordneten Spannpratzen 3 und den Saugeinrichtungen 6 während dem Rückhub des Vorschubschlittens festgehalten. Der Vorschubschlitten 2 und die Schlitten 33 werden dabei soweit entspannt zurückgezogen, bis das gewünschte Restmaß erreicht ist. Spannpratzen 3 schließen und Saugeinrichtungen 6 saugen das Werkstück 1 fest, welches gemeinsam mit dem Vorschubschlitten 2 und Schlitten 33 soweit vorgeschoben wird, bis das gewünschte Zuschnittmaß erreicht ist.

Um möglichst geringe Reibung zwischen Auflagetisch 22 und Werkstück 1 zu erlangen, sind in der Tischauflage 22 Düsen 7 zur Erzeugung eines Luftlagers in entsprechenden Abständen eingebracht, die über ein Axialgebläse 8 mit Luft versorgt werden und damit ein "Schwimmen" des Werkstückes während dem Verschieben erzeugen. Dieses Luftlager verwendet der Bediener 26 auch während dem Verschieben und Positionieren des Werkstücks von Hand beim und zum Anlegen des Werkstücks 1 an die Führungsbolzen 30 der Spannpratzen 3, die in der Reihe die Anschlagkante 31 bilden.

Die Anordnung der Luftdüsen ist auch in dem Abnahmetisch 38 vorgesehen, so dass über der gesamten Werkstückauflage jeder Größe eines plattenförmigen Werkstücks sehr leicht beweglich ist. Beim Umschalten des Luftgebläses 8 über ein Umschaltventil 39 auf Luftumkehr, wird durch die Düsen ein Saugeffekt erzielt, der das Fixieren des Werkstückes zusätzlich unterstützt.

Dadurch, dass der Bediener 26 seitlich neben der Maschine steht, kann er, bedingt durch einen nicht vorhandenen Druckbalken, ein abgesägtes Werkstück 1 mit Unterstützung des Luftlagers, das er per Pedaldruck auslöst, leicht zurückholen und einem weiteren Zuschnitt zuführen. Zur Nullpositionierung der Werkstückvorderkante ist ein abtauchbarer Anschlagbolzen 40 außerhalb der Schnittebene vorgesehen, bei dem das Offsetmaß zur Schnittlinie 5 in der Steuerung berücksichtigt wird.

Durch das liegende und durch Saugeinrichtungen festgehaltene Werkstück 1 kann eine hohe Schnittgenauigkeit erzielt werden und es entsteht dabei ein verhältnismäßig kleiner Flächenbedarf. Durch das übersichtliche Handling und Fertigbearbeitung eines Werkstückes 1 ohne große Wege für den Bediener 26 ergibt sich eine zeitsparende und flexible Arbeitsweise.

Die Erfindung wird anhand nachfolgender Zeichnungen näher erläutert:

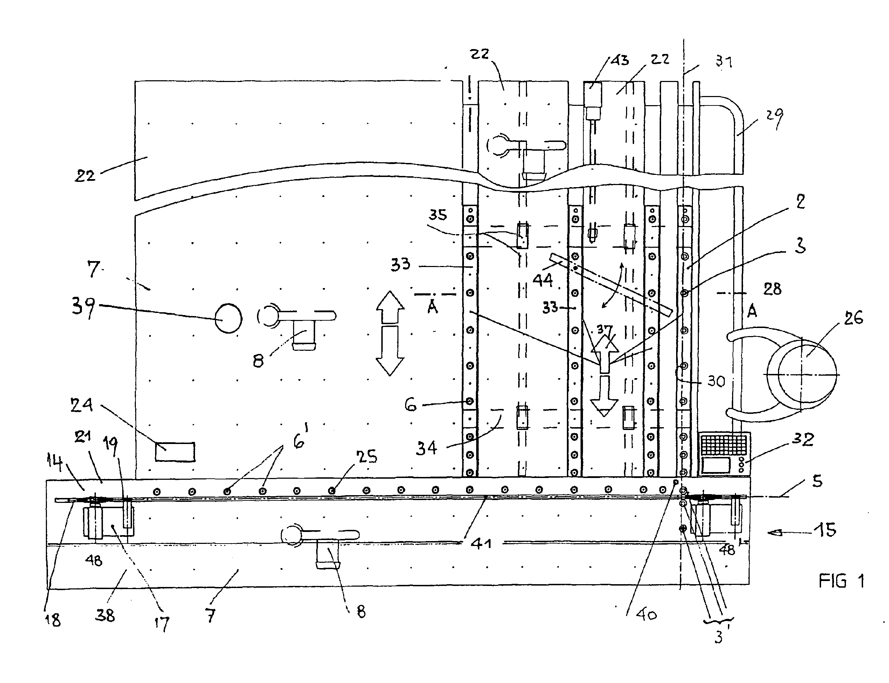

- Fig. 1:: Zeigt eine Draufsicht auf eine erste bevorzugte Ausführungsform der Sägevorrichtung 15 mit Sägegestell 16, Sägetisch 14, Sägewagen 17 in Ausgangsposition 48 und Endposition 48', Sägeschlitz 41 für die Sägeblätter 18+19, reihenförmig angeordnete Saugeinrichtungen 6' entlang dem Sägeschlitz 41, den Abnahmetisch 38 mit Axialgebläse 8,1 Spannpratzen 3' vor und 2 Spannpratzen 3' nach dem Sägeschnitt - alle 3 fest in der Tischplatte 14 fixiert - dem Vorschubschlitten 2 mit den Spannpratzen3 und der Werkstückanschlaglinie 31, die parallel angeordneten Schlitten 33 mit Saugeinrichtungen 6, den Rahmen 34 auf Linearführungen 35 und dem elektromotorischen NC-Antrieb 43, den Aufgabetischen 22 mit den Aixialgebläsen 8, der Distanzeinrichtung 29 zwischen Vorschubschlitten 2 und Bediener 26 und dem Bedienpult 32

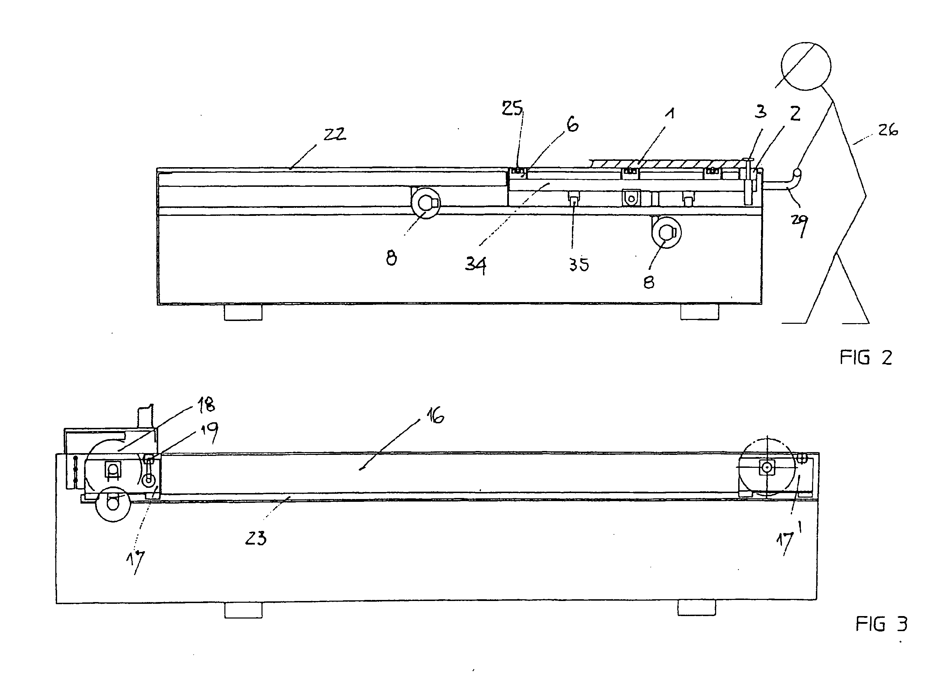

- Fig. 2:: Zeigt einen Längsschnitt A-A durch den Aufgabetisch 22 mit Vorschubschlitten 2, Linearführungen 35, den Saugeinrichtungen 6, den Spannpratzen 3 und dem Bediener 26 der Sägevorrichtung nach Figur 1.
- Fig. 3:: Zeigt einen Querschnitt durch das Sägegestell 16 mit Sägewagen 17, Linearführungen 23, dem Haupt- und Vorritzsägeblatt 18+19 samt Antriebsmotoren und den Sägewagen in Startposition 17 und Endposition 17' der Sägevorrichtung nach Figur 1.

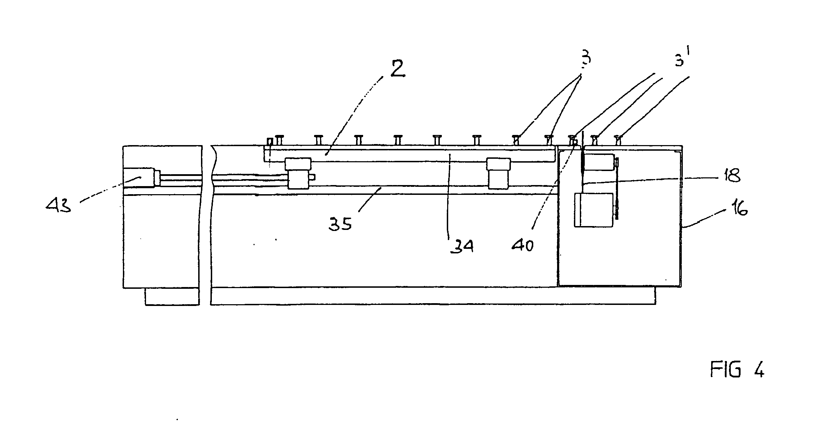

- Fig. 4:: Zeigt einen Längsschnitt durch die Vorschubeinheit und mit Längsführungen 35, dem Vorschubschlitten 2 mit Spannpratzen 3 und 3'und dem elektromotorischen NC-Antrieb 43 samt Sägegestell 16 der Sägevorrichtung nach Figur 1.

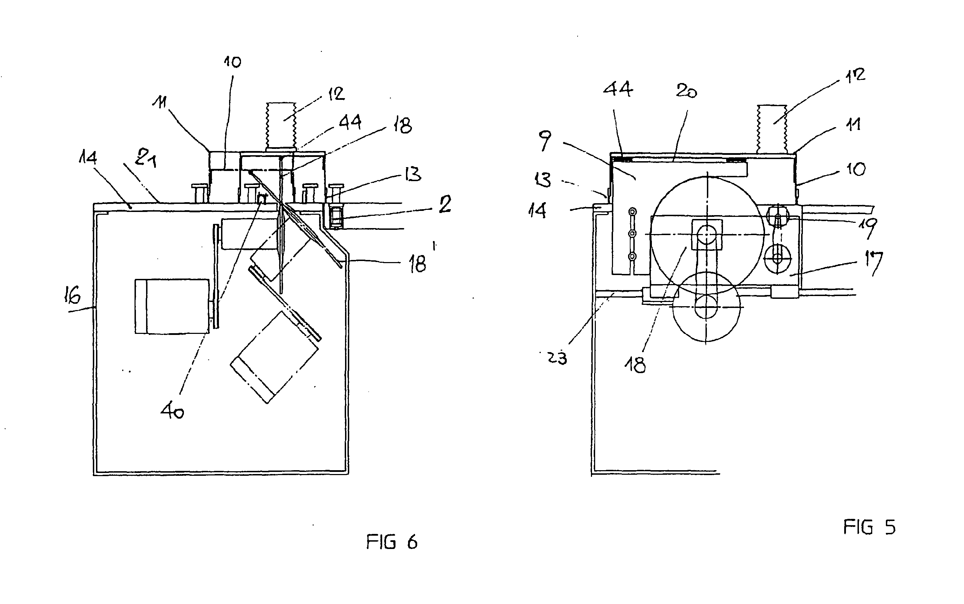

- Fig. 5:: Zeigt einen Schnitt durch Sägeaggregat 17 und Sicherheitshaube 10 und Absaughaube 11 samt Absaugschlauch 12 und Scharnier 44 und Borsten 13 zum Gleiten auf der Tischoberfläche 21 der Sägevorrichtung nach Figur 1.
- Fig. 6:: Zeigt einen Querschnitt durch das Sägegestell mit um 45 Winkelgrad geneigtem Sägeaggregat 18+18' und der mitgeschwenkten Schutzhaube 10 und Absaughaube 11, sowie dem absenkbaren Anschlagbolzen 40 zum Anschlagen der Werkstückvorderkante der Sägevorrichtung nach Figur 1.
- Fig. 7:: Zeigt eine perspektivische Ansicht von schräg oben einer zweiten Ausführungsform der erfindungsgemäßen Sägevorrichtung, und
- Fig. 8:: Zeigt einen Ausschnitt der Vorrichtung gemäß Figur 1.

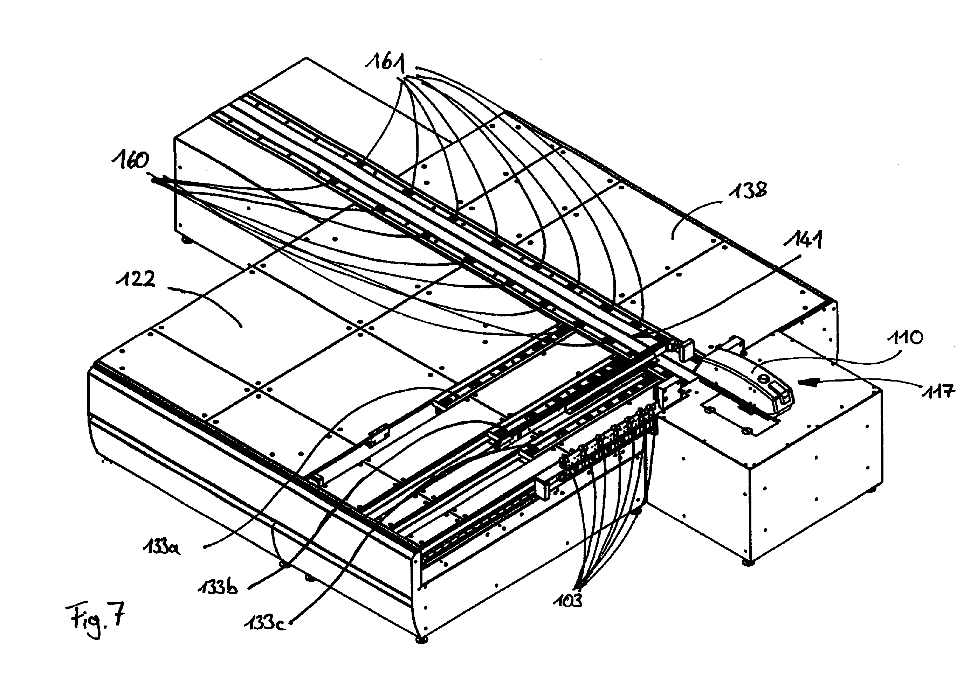

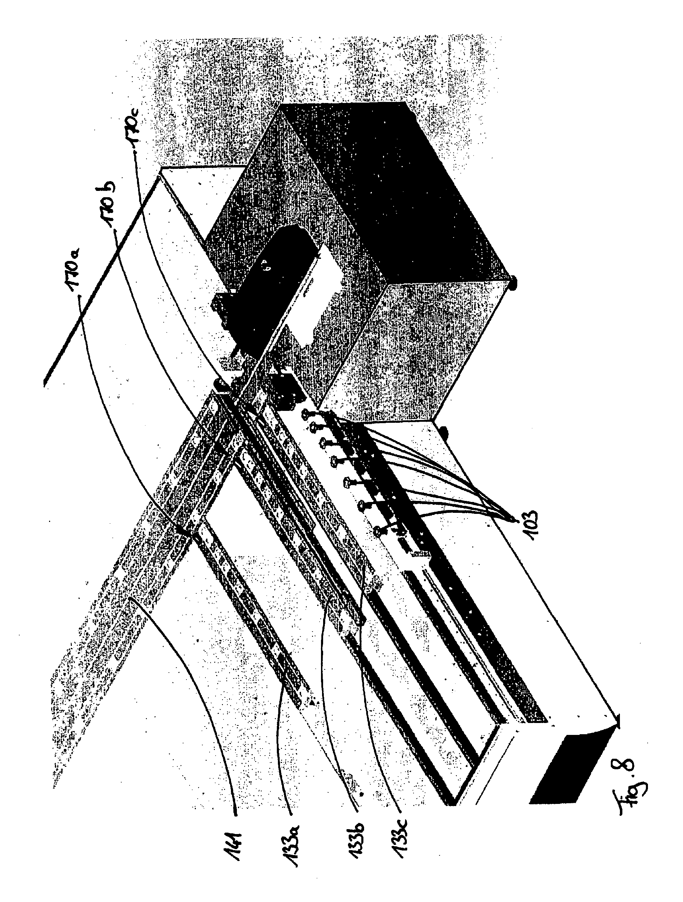

Bezug nehmend auf die Figuren 7 und 8 weist die zweite Ausführungsform in gleicher Weise wie die erste Ausführungsform einen Aufgabetisch 122 und einen Abnahmetisch 138 auf, zwischen denen ein Sägeschlitz 141 angeordnet ist. Durch den Sägeschlitz 141 ragt von unten her nach oben ein Umfangsabschnitt eines Kreissägeblatts des Sägeaggregats 117 und ein Spaltkeil, der in Sägerichtung hinter dem Kreissägeblatt herläuft, hindurch. Auf dem Spaltkeil ist eine Schutzhaube 110 angeordnet, die dazu dient, das Sägeblatt von oben abzudecken, um Verletzungen zu vermeiden, und die mit einem Absaugschlauch verbunden ist, um die beim Sägen anfallenden Späne abzusaugen.

Das Sägeaggregat 117 kann mitsamt des Spaltkeils und der daran montierten Schutzhaube entlang des Sägeschlitzes 141 linear bewegt werden, um den Sägeschnitt durchzuführen.

Beidseits des Sägeschlitzes 141 ist jeweils eine Reihe von Saugeinrichtungen 160, 161 angeordnet. Die Saugeinrichtungsreihe 160 ist auf der zum Aufgabetisch liegenden Seite des Sägeschlitzes angeordnet und die Saugeinrichtungsreihe 161 ist auf der zum Abnahmetisch liegenden Seite des Sägeschlitzes 141 angeordnet. Mit den Saugeinrichtungsreihen 160, 161 wird das Werkstück während der Durchführung des Sägeschnitts gehalten und nach Durchführung des Sägeschnitts hält die Saugeinrichtungsreihe 160 das auf dem Aufgabetisch liegende Werkstückhalbzeug und die Saugeinrichtungsreihe 161 das auf dem Abnahmetisch liegende, abgetrennte Werkstück.

Die Sägevorrichtung weist darüber hinaus drei sich senkrecht und in der Ebene des Aufgabetisches erstreckende Fixierschlitten 133a-c mit jeweils daran angeordneten, in Reihe ausgerichteten Saugeinrichtungen auf. Diese Fixierschlitten sind gemeinsam senkrecht zur Linearbewegung des Sägeaggregats in der Ebene des Aufgabetisches bewegbar und ermöglichen somit eine Verschiebung und Positionierung eines Werkstücks, das mittels der Saugeinrichtungen der Fixierschlitten gespannt ist.

Wie in besserem Detail insbesondere in Figur 8 zu erkennen, weist die erfindungsgemäße Sägevorrichtung weiterhin an einer Seite des Aufgabetisches eine Reihe von Spannpratzen 103 auf. Die Spannpratzen bestehen aus jeweils einem Bolzen, der sich senkrecht zur Werkstückauflage nach oben erstreckt und enden auf der Oberseite in einem am Bolzen befestigten Teller. Mittels der Spannpratzen kann ein Werkstück gespannt werden, indem der Bolzen nach unten gezogen wird, bis der Teller auf der Oberfläche des Werkstücks aufliegt und hieran fest angepresst wird.

Dabei dienen gleichzeitig die Bolzen der Spannpratzen, die in einer Reihe in Flucht angeordnet sind, als Anlagekante für das Werkstück, um hierdurch eine referenzierte, rechtwinklige Lage zum Sägeschlitz 141 zu erzielen.

Wie weiterhin aus Figur 8 erkennbar, sind an jedem der drei Fixierschlitten 133a-c an ihrem zum Sägeschlitz 141 weisenden Ende drei versenkbare Anschläge 170 a-c angeordnet. Die versenkbare Anschläge 170 a-c liegen ebenfalls in Fluchtung zueinander und bilden hierdurch eine parallel zum Sägeschlitz 141 liegende Anschlagkante aus, wenn sie über die Werkstückauflagefläche ausgefahren sind. Auf diese Weise kann eine parallel zum Sägeschlitz ausgerichtete Kante des Werkstücks als Referenz eingestellt werden. Die Anschlagelemente 170 a-c können nach einer solchen Positionierung und Referenzierung dann abgesenkt werden, so dass sie einer Bewegung des Werkstücks in Richtung des Sägeschlitzes, also in Vorschubrichtung, nicht im Wege stehen.

Bei der Ausführungsform gemäß den Figuren 7 und 8 ist weiterhin vorgesehen, dass die Schutzhaube von dem Sägeaggregat abnehmbar ist und der Spaltkeil, der funktional auch oder nur als Schutzhaubenträger dient, entfernt oder unter die Werkstückauflagefläche verschwenkt oder verschoben oder vom Sägeaggregat abgekoppelt und vorzugsweise automatisch in der Maschine geparkt werden kann. Auf diese Weise wird es möglich, durch eine entsprechende Höheneinstellung des Sägeblatts einen Sägeschnitt auszuführen, der das Werkstück nicht vollständig durchtrennt, sondern lediglich von unten her eine Nut in das Werkstück einfräst.

## Patentansprüche

1. Sägevorrichtung (15) mit einem schwenkbaren und linear verfahrbarem Sägeaggregat (17), einer Werkstückauflage (22, 38), einer Einrichtung zum Spannen (3) von einem oder mehreren Werkstücken, eine Einrichtung zum Vorwärtsbewegen und Positionieren (2) des/der Werkstücks/e,
**dadurch gekennzeichnet, dass** an der Werkstückauflage eine Anlagekante bereitgestellt ist, die vorzugsweise seitlich an der Werkstückauflage liegt und die parallel oder senkrecht zu einer Vorschubrichtung (37) des Werkstücks liegt und dass parallel zur Vorschubrichtung ein oder mehrere Fixierschlitten (33) angeordnet sind, die Saugvorrichtungen tragen, die über eine Vakuumquelle, insbesondere eine Vakuumpumpe (24) versorgt werden und die auf einem Rahmen (34) sitzen, der in Vorschubrichtung des Werkstücks auf Linearführungen bewegbar ist und dass entlang des Sägeschnitts Saugeinrichtungen (6') angeordnet sind.

2. Sägevorrichtung nach Anspruch 1, **dadurch gekennzeichnet, dass** die Einrichtung zum Spannen von einem oder mehreren Werkstücken und die Einrichtung zum Vorwärtsbewegen und Positionieren des/der Werkstücks/e in einer Einrichtung integriert ist, die vorzugsweise weiterhin ein Bedienpult umfasst.

3. Sägevorrichtung nach einem der vorhergehenden Ansprüche, **dadurch gekennzeichnet, dass** die Einrichtung zum Spannen von einem oder mehreren Werkstücken mehrere Spannpratzen zum Festklemmen des Werkstücks umfasst, die vorzugsweise auf einem Vorschubschlitten (2) in Reihe parallel zu Vorschubrichtung angeordnet sind und die weiter vorzugsweise Führungsbolzen umfassen, welche die Anlagekante für das Werkstück bilden.

4. Sägevorrichtung nach Anspruch 3, **dadurch gekennzeichnet, dass** die Fixierschlitten parallel zum Vorschubschlitten angeordnet sind und vorzugsweise gemeinsam mit dem Vorschubschlitten auf dem Rahmen (34) sitzen und mit diesem bewegbar sind.

5. Sägevorrichtung nach einem der vorhergehenden Ansprüche, **dadurch gekennzeichnet, dass** das Sägeaggregat eine Hauptsäge und eine Ritzsäge umfasst.

6. Sägevorrichtung nach einem der vorhergehenden Ansprüche, **dadurch gekennzeichnet, dass** das Sägeaggregat mit einem elektromotorischen, pneumatischen oder hydraulischen Antrieb zum linearen Verfahren versehen ist.

7. Sägevorrichtung nach einem der vorhergehenden Ansprüche, **dadurch gekennzeichnet, dass** die Werkstückauflage einen Aufgabetisch und einen Abnahmetisch umfasst, wobei die Anlagekante seitlich am Aufgabetisch liegt und Aufgabetisch und/oder Abnahmetisch vorzugsweise eine Lagerung zur horizontalen Verschiebbarkeit von aufgelegten Werkstücken umfassen, insbesondere ein oder mehrere Luftlager, Kugellager oder Rollenlager.

8. Sägevorrichtung nach einem der vorhergehenden Ansprüche, **dadurch gekennzeichnet, dass** die Fixierschlitten, der Vorschubschlitten und/oder der Rahmen (34) von einem NC-gesteuerten Motor vor- und rückwärts bewegbar ist/sind.

9. Sägevorrichtung nach einem der vorhergehenden Ansprüche, **dadurch gekennzeichnet, dass** die entlang des Sägeschnitts angeordneten Saugeinrichtungen in einer oder mehreren Reihen angeordnet sind und vorzugsweise zumindest eine Reihe auf der einem/dem Aufgabetisch gegenüberliegenden Seite angeordnet ist/sind.

10. Sägevorrichtung nach einem der vorhergehenden Ansprüche, **dadurch gekennzeichnet, dass** das Sägeaggregat in eine Werkzeugwechselposition verfahrbar ist, und durch Verfahren des Sägeaggregats in die Werkzeugwechselposition eine Abdeckklappe entriegelt und gegebenenfalls geöffnet wird,welche einen Werkzeugwechsel ermöglicht.

11. Sägevorrichtung nach einem der vorhergehenden Ansprüche, **dadurch gekennzeichnet, dass** die Bedienposition (28) an zur Werkstück-Vorschubrichtung angeordneten Seite liegt und der Bediener (26) durch eine Distanzeinrichtung (29) geschützt ist.

12. Sägevorrichtung nach einem der vorhergehenden Ansprüche, **dadurch gekennzeichnet, dass** der Luftstrom eines Gebläses (8) für die Luftlager umgekehrt werden kann und **dadurch** eine Saugfunktion erzeugt wird, mit der über die Luftdüsen (7) das Werkstück (1) auf der Tischfläche (21) zusätzlich fixiert wird.

13. Sägevorrichtung nach einem der vorhergehenden Ansprüche, **dadurch gekennzeichnet, dass** zum Zusägen von winkligen Werkstücken ein verstellbarer Anschlagwinkel (44) auf dem Vorschubschlitten (2) aufgesetzt werden kann.
